# EUROPEAN PATENT SPECIFICATION

(11) **EP 1 782 155 B1**
(45) Date of publication and mention of the grant of the patent: **15.12.2010**
(21) Application number: 05791681.9
(22) Date of filing: 25.08.2005
(51) Int. Cl.: G06F 1/00, G06F 9/46

(54) **METHODS AND APPARATUSES FOR AUTOMATICALLY SELECTING A PROFILE**
VERFAHREN UND VORRICHTUNGEN FÜR DIE AUTOMATISCHE AUSWAHL EINES PROFILS
PROCEDES ET APPAREILS DE SELECTION AUTOMATIQUE D'UN PROFIL

(30) Priority: 27.08.2004 US 929051
(43) Date of publication of application: 09.05.2007
(73) Proprietor: Sony Computer Entertainment America, Inc., Foster City, CA 94404 (US)
(72) Inventor: TU, Edgar, A., San Diego, CA 92127 (US)
(74) Representative: Davies, Simon Robert
(86) International application number: PCT/US2005/030454
(87) International publication number: WO 2006/026453

(56) References cited:
- EP-A- 0 762 260
- WO-A-01/65375
- US-A1- 2005 050 160

## Description

### FIELD OF THE INVENTION

The present invention relates generally to selecting a profile and, more particularly, to automatically selecting a profile.

### BACKGROUND

With the increased use of electronic devices and services, there has been a proliferation of applications that allows a user to customize the applications with personalized preferences. In some instances, these personalized preferences may include storage of personal data such as documents and images belonging to the user and displaying the personal data in a format selected by the user.

Typically, these customized applications with personalized preferences are accessed through an electronic device by requiring the user to submit a user identifier and a password. In other instances, the electronic device may be programmed to automatically access a customized application with the personalized preferences of a particular user without a user identifier and corresponding password. However in this instance, access to the personalized preferences of a particular user would indiscriminately be available to all users of the electronic device and would not safeguard these personalized preferences nor prevent unauthorized users from accessing the personalized preferences.

WO 01/65375 discloses a system for the authentication of users to enterprise resources. The authentication server has pre-defined polices. The execution of the policies involves the use of one or more templates, which are created and stored in the server each time a user enrolls in a different device. Biometric devices utilize a scientific technique to identify a user based on compared measurements of unique personal characteristics, such as measurements of finger and hand geometry, retina and facial images, weight, DNA data, and so on.

### SUMMARY

The invention is defined in the appended claims.

### BRIEF DESCRIPTION OF THE DRAWINGS

The accompanying drawings, which are incorporated in and constitute a part of this specification, illustrate and explain one embodiment of the methods and apparatuses for automatically selecting a profile. In the drawings,
Figure 1 is a diagram illustrating an environment within which the methods and apparatuses for automatically selecting a profile are implemented;
Figure 2 is a simplified block diagram illustrating one embodiment in which the methods and apparatuses for automatically selecting a profile are implemented;
Figure 3 is a simplified block diagram illustrating a system, consistent with one embodiment of the methods and apparatuses for automatically selecting a profile;
Figure 4 is a simplified block diagram illustrating a system, consistent with one embodiment of the methods and apparatuses for automatically selecting a profile;
Figure 5 illustrates an exemplary record consistent with one embodiment of the methods and apparatuses for automatically selecting a profile;
Figure 6A is a flow diagram consistent with one embodiment of the methods and apparatuses for automatically selecting a profile;
Figure 6B is a flow diagram consistent with one embodiment of the methods and apparatuses for automatically selecting a profile; and
Figure 7 is a flow diagram consistent with one embodiment of the methods and apparatuses for automatically selecting a profile.

### DETAILED DESCRIPTION

The following detailed description of the methods and apparatuses for automatically selecting a profile refers to the accompanying drawings. The detailed description is not intended to limit the methods and apparatuses for automatically selecting a profile. Instead, the scope of the methods and apparatuses for automatically selecting a profile is defined by the appended claims and equivalents. Those skilled in the art will recognize that many other implementations are possible, consistent with the methods and apparatuses for automatically selecting a profile.

References to "content" includes data such as photographs, images, video, text, graphics, and the like, that are embodied in digital or analog electronic form.

References to "electronic device" includes a device such as a gaming console, a set top box, a computer, a cellular telephone, a personal digital assistant, a specialized computer such as an electronic interface with an automobile, and the like.

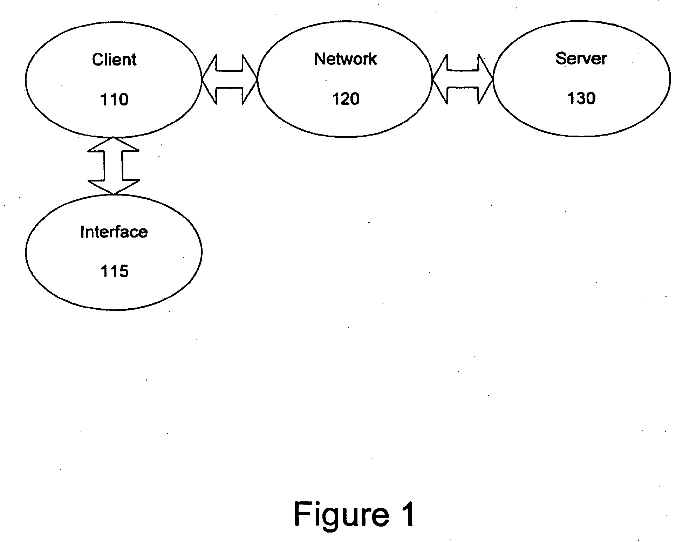

Figure 1 is a diagram illustrating an environment within which the methods and apparatuses for automatically selecting a profile are implemented. The environment includes an electronic device 110 (e.g., a computing platform configured to act as a client device, such as a computer, a personal digital assistant, a cellular telephone, a camera device, a set top box, a gaming console), a user interface 115, a network 120 (e.g., a local area network, a home network, the Internet), and a server 130 (e.g., a computing platform configured to act as a server). In one embodiment, the network 120 can be implemented via wireless or wired solutions.

In one embodiment, one or more user interface 115 components are made integral with the electronic device 110 (e.g., keypad and video display screen input and output interfaces in the same housing as personal digital assistant electronics (e.g., as in a Clie® manufactured by Sony Corporation). In other embodiments, one or more user interface 115 components (e.g., a keyboard, a pointing device such as a mouse and trackball, a microphone, a speaker, a display, a camera) are physically separate from, and are conventionally coupled to, electronic device 110. The user utilizes interface 115 to access and control content and applications stored in electronic device 110, server 130, or a remote storage device (not shown) coupled via network 120.

In accordance with the invention, embodiments of automatically selecting a profile as described below are executed by an electronic processor in electronic device 110, in server 130, or by processors in electronic device 110 and in server 130 acting together. Server 130 is illustrated in Figure 1 as being a single computing platform, but in other instances are two or more interconnected computing platforms that act as a server.

The methods and apparatuses for automatically selecting a user profile are shown in the context of exemplary embodiments of applications in which the user profile is selected from a plurality of user profiles based on a peripheral device such as a portable memory device, a dongle, and the like. In one embodiment, each peripheral device is associated with a unique user identifier which, in turn, is associated with a unique user profile. In one embodiment, the user profile includes content utilized by the user and user preferences such as formatting the display of the content.

In one embodiment, the methods and apparatuses for automatically selecting a user-profile-is configured to allow the user to automatically select and authorize the use of the user profile on a previously authorized electronic device 110. The device identifier of the previously authorized electronic device 110 matches the device identifier associated with the user profile. Once a match occurs between the device identifier of previously authorized electronic device 110 and the user profile, then the user profile is automatically available to the authorized electronic device 110. Further, if multiple device identifiers are associated with the user profile, then the corresponding peripheral device can utilize multiple authorized electronic devices 110 to automatically access the user profile.

In one embodiment, the methods and apparatuses for automatically selecting a user profile is configured to allow the user to utilize an unauthorized electronic device 110 to access the user profile by inserting the associated peripheral device into the unauthorized electronic device 110 and supplying a password. If the password provided by the user and the password associated with the user profile (as identified by the peripheral device) both match, then the user is given access to the user profile.

In one embodiment, the methods and apparatuses for automatically selecting a user profile is configured to protect the user profile from unauthorized access in the event the peripheral device is lost, stolen, or misplaced. For example, when the peripheral device is utilized on an unauthorized electronic device 110 to gain access to the associated user profile, a password is requested. Without the password, the user profile is not available from the unauthorized electronic device 110.

In one embodiment, the methods and apparatuses for automatically selecting a user profile allow the user to customize and update the user profile with content and preferences.

In one embodiment, the peripheral device is detected by the electronic device 110 via inserting the peripheral device within the electronic device 110. In another embodiment, the peripheral device is detected by the electronic device 110 via detecting the peripheral device within the proximity of the electronic device 110.

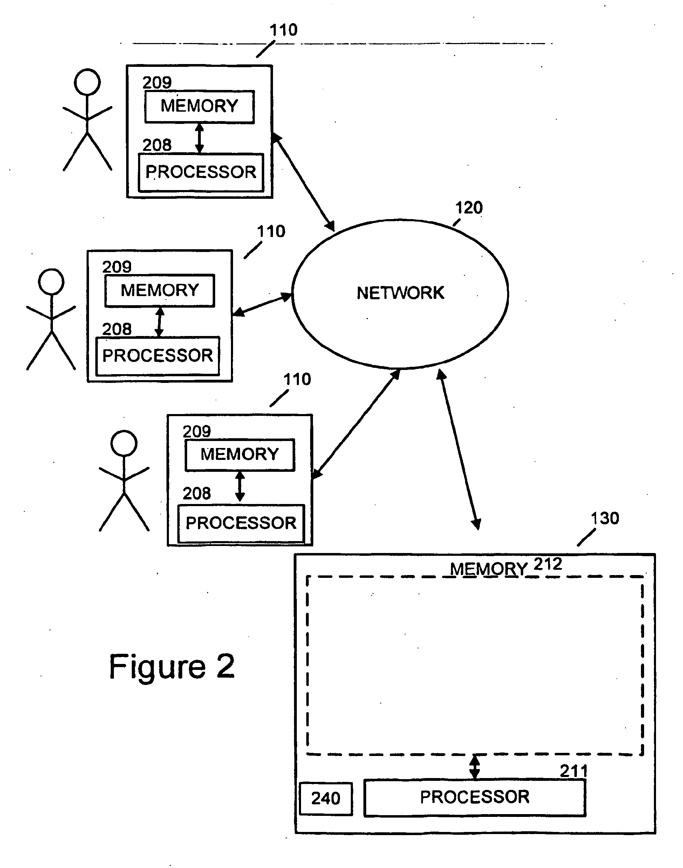

Figure 2 is a simplified diagram illustrating an exemplary architecture in which the methods and apparatuses for automatically selecting a profile are implemented. The exemplary architecture includes a plurality of electronic devices 110, a server device 130, and a network 120 connecting electronic devices 110 to server 130 and each electronic device 110 to each other. The plurality of electronic devices 110 are each configured to include a computer-readable medium 209, such as random access memory, coupled to an electronic processor 208. Processor 208 executes program instructions stored in the computer-readable medium 209. A unique user operates each electronic device 110 via an interface 115 as described with reference to Figure 1.

Server device 130 includes a processor 211 coupled to a computer-readable medium 212. In one embodiment, the server device 130 is coupled to one or more additional external or internal devices, such as, without limitation, a secondary data storage element, such as database 240.

In one instance, processors 208 and 211 are manufactured by Intel Corporation, of Santa Clara, California. In other instances, other microprocessors are used.

The plurality of client devices 110 and the server 130 include instructions for a customized application for identifying opportunities to capture content. In one embodiment, the plurality of computer-readable medium 209 and 212 contain, in part, the customized application. Additionally, the plurality of client devices 110 and the server 130 are configured to receive and transmit electronic messages for use with the customized application. Similarly, the network 120 is configured to transmit electronic messages for use with the customized application.

One or more user applications are stored in memories 209, in memory 211, or a single user application is stored in part in one memory 209 and in part in memory 211. In one instance, a stored user application, regardless of storage location, is made customizable based on automatically selecting a profile as determined using embodiments described below.

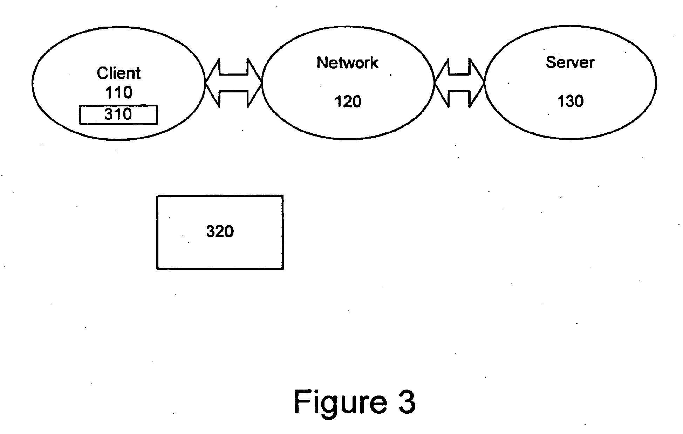

Figure 3 is a diagram illustrating an environment within which the methods and apparatuses for automatically selecting a profile are implemented. Similar to Figure 1, the environment includes an electronic device 110, a network 120, and a server 130. The electronic device 110 also includes a receptacle 310.

In one embodiment, the receptacle 310 is configured to receive a peripheral device 320 such as a memory card, a hard drive, a software key such as a dongle, a video game cartridge, and the like. In one embodiment, the receptacle 310 has the capability to interface with the peripheral device 320 having a universal serial bus (USB) connection, compact flash (CF) card connection, Memory Stick® connection, a video game cartridge connection, and the like. In another embodiment, the receptacle 310 is configured to detect the peripheral device 320 through wireless transmission such as radio frequency. In this embodiment, the receptacle 310 detects the proximity of the peripheral device 320 wherein the peripheral device 320 may be a cellular phone, a personal digital assistant, or any device having a wireless identification tag.

In one embodiment, the electronic device 110 is associated with a device identifier that uniquely corresponds to the particular electronic device 110. Similarly, the peripheral device 320 is associated with a user identifier that corresponds to a particular user.

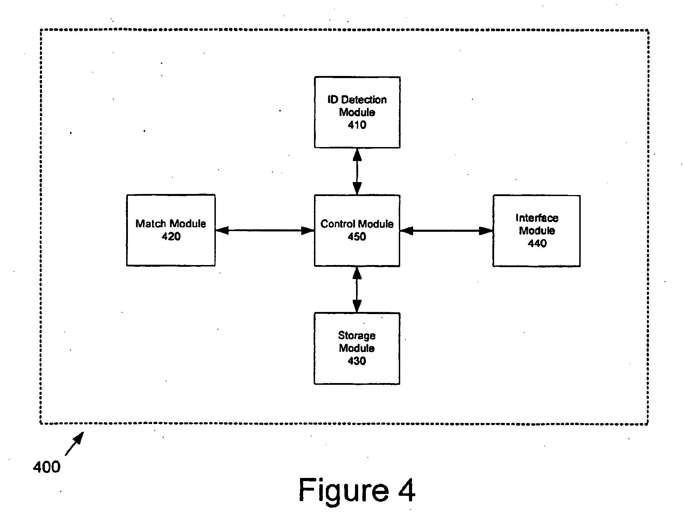

Figure 4 illustrates one embodiment of an automatic profile selection system 400. The automatic profile selection system 400 includes an identification detection module 410, a match module 420, a storage module 430, an interface module 440, and a control module 450. In one embodiment, the control module 450 communicates with the identification detection module 410, the match module 420, the storage module 430, and the interface module 440.

In one embodiment, the control module 450 coordinates tasks, requests, and communications between the identification detection module 410, the match module 420, the storage module 430, and the interface module 440.

In one embodiment, the identification detection module 410 detects the device identifier associated with a particular electronic device 110. Further, the identification detection module 410 also detects the user identifier from the peripheral device 320.

For example, the device identifier corresponding to the electronic device 110 is detected by the identification detection module 410 when the electronic device 110 is connected to the server 130 via the network 120. Further, the user identifier corresponding to the peripheral device 320 is detected by the identification detection module 410 when the peripheral device 320 is inserted within the receptacle 320 when the electronic device 110 is connected to the server 130 via the network 120.

In one embodiment, the match module 420 compares the detected device identifier and the user identifier to a plurality of profiles stored within the storage module 430.

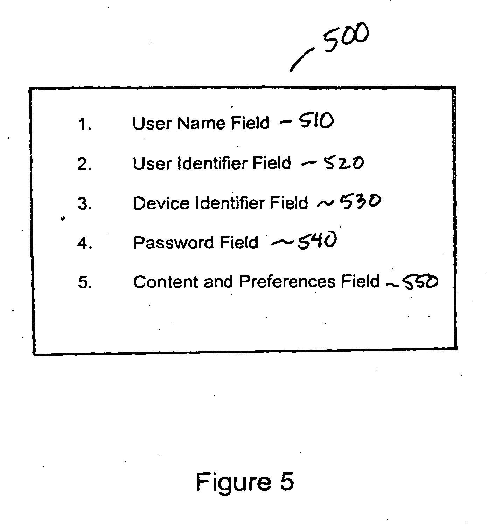

In one embodiment, the storage module 430 stores a plurality of profiles wherein each profile is associated with a particular user. In one embodiment, the profile stores various information as shown in an exemplary profile in Figure 5. In one embodiment, the storage module 430 is located within the server device 130. In another embodiment, portions of the storage module 430 are located within the electronic device 110.

In another embodiment, the storage module 430 stores content associated with the profile.

In one embodiment, the interface module 440 detects an action such as the peripheral device 320 being inserted within the receptacle 320.

In another embodiment, the interface module 440 detects the electronic device 110 as the electronic device 110 is connected to the network 120.

The system 400 in Figure 4 is shown for exemplary purposes and is merely one embodiment of the methods and apparatuses for automatically selecting a profile. Additional modules may be added to the system 400 without departing from the scope of the methods and apparatuses-for automatically selecting a profile. Similarly, modules may be combined or deleted without departing from the scope of the methods and apparatuses for automatically selecting a profile.

Figure 5 illustrates a simplified record 500 that corresponds to selecting a user profile belonging to a user. In one embodiment, the record 500 is stored within the storage module 430 and utilized within the system 400. In one embodiment, the record 500 includes a user name field 510, a user identifier field 520, a device identifier field 530, a password field 540, and a content and preferences field 550.

In one embodiment, the user name field 510 provides a customizable label for the particular user. For example, the user name field 510 may be labeled with arbitrary names such as "Bob", "Emily's Profile", and the like.

In one embodiment, the user identifier field 520 uniquely identifies each particular user. For example, in one embodiment, the user identifier field 520 is preprogrammed into the peripheral device 320 and is not customizable by the user. In one embodiment, the user identifier field 520 is utilized to associate the record 500 with a particular peripheral device 320.

In one embodiment, the device identifier field 530 uniquely identifies each particular electronic device 110. For example, the user identifier field 530 is preprogrammed into the electronic device 110 and is not customizable by the user. In one embodiment, the device identifier field 530 is utilized to associate the record 500 with a particular electronic device 110.

In another embodiment, multiple device identifiers are utilized within the device identifier field 530 to associate the profile with multiple electronic devices 110.

In one embodiment, the password field 540 is utilized by the user to gain access to the content and preferences as identified within the record 500 under particular circumstances. In one embodiment, the content within the password field 540 is customizable by the authorized user of the record 500.

In one embodiment, the content and preferences field 550 lists the content and preferences associated with the record 500. In one embodiment, the content and preferences field 550 is customized by the authorized user. For example, the authorized user is able to associate particular content such as photographs, music, and/or documents with the record 500. Further, the authorized user is also able to customize the display of the content such as the layout of the associated content.

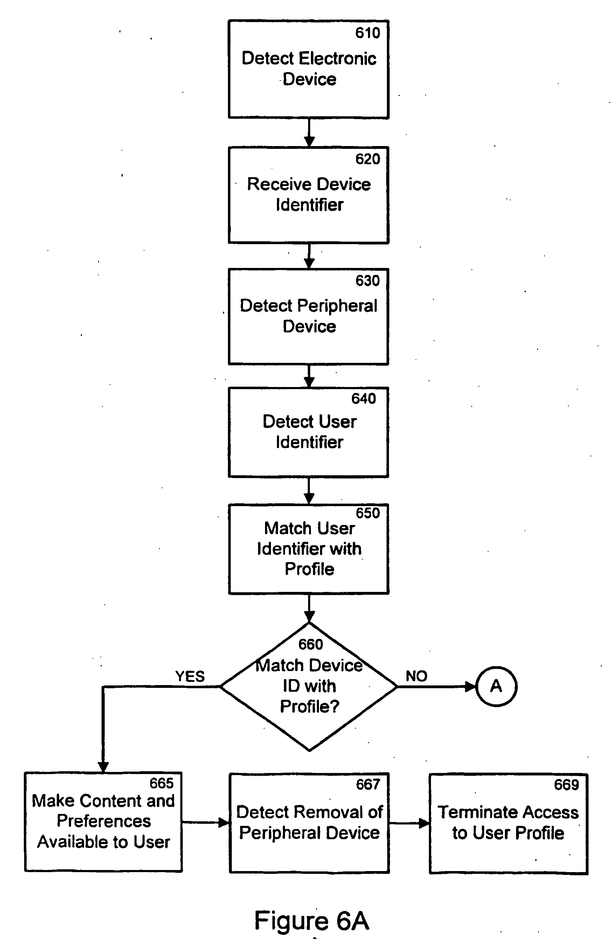

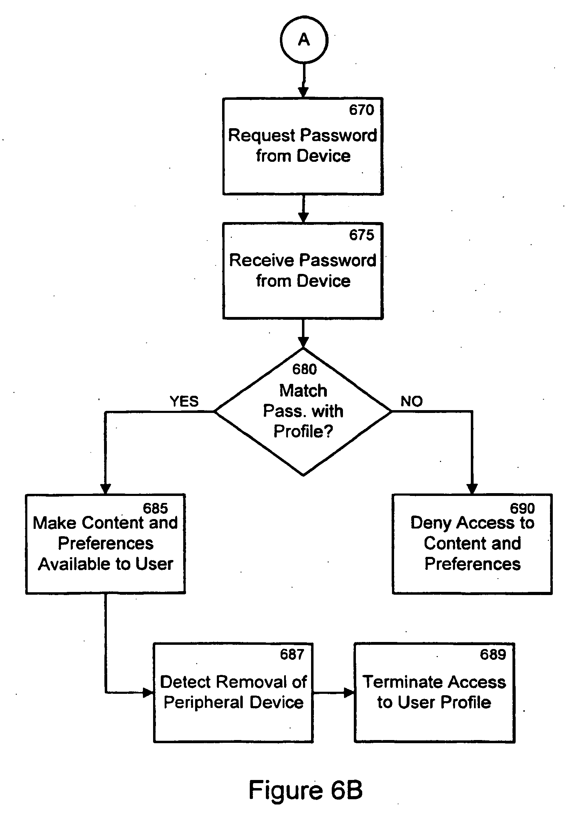

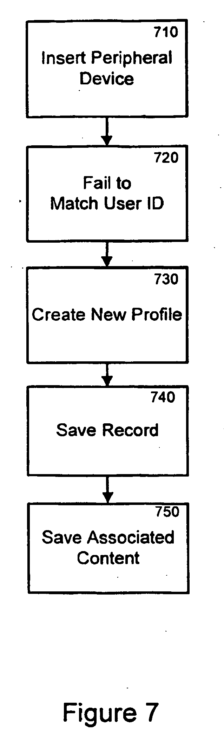

The flow diagrams as depicted in Figures 6A, 6B, and 7 are one embodiment of the methods and apparatuses for automatically selecting a profile.

The flow diagram in Figure 6A illustrates automatically selecting a profile according to one embodiment of the invention.

In Block 610, an electronic device 110 is detected. For example, the electronic device 110 is detected by the system 400 through the network 120.

In Block 620, a device identifier is received from the electronic device 110. The device identifier uniquely identifies the particular electronic device 110 and distinguishes the particular electronic device 110 from other electronic devices 110.

In Block 630, the peripheral device 320 is detected. In one embodiment, the peripheral device 320 is detected once the peripheral device is inserted within the receptacle 310 of the electronic device 110 that is in communication with the server 130.

In Block 640, a user identifier is received from the peripheral device 320. The user identifier uniquely identifies a profile belonging to a user. Further, the user identifier is associated with the corresponding peripheral device 320.

In Block 650, a match is performed between the user identifier detected from the peripheral device 320 in the Block 640 and a matching user identifier from an exemplary user profile as shown in the record 500. For example, a specific user profile is identified based on matching the user identifier detected from the peripheral device 320 and the user identifier corresponding with the specific user profile. In one embodiment, a plurality of user profiles are stored within the storage module 430.

In Block 660, a match is performed between the device identifier from the electronic device 110 in the Block 620 and a matching device identifier from the user profile that was identified in the Block 650.

If there is a match between the device identifier from the electronic device 110 and the device identifier from the selected user profile, then according to Block 665, the preferences and content associated with the selected user profile is made available to the electronic device 110 detected in the Block 610. For example, the electronic device 110 has access to the customized content, presentation of the content, and user preferences as described by the user profile. Further, when the electronic device 110 has access to the user profile, the electronic device 110 may modify the user profile by modifying the content, the presentation of the content, and other user preferences associated with the particular user profile.

For example, when an electronic device 110 has gained access to the user profile in the Block 665, the electronic device 110 displays a personalized screen based on the particular user profile. In one embodiment, the personalized screen displays content that is formatted such as having the list of content displayed in a particular order wherein the particular formatting is based upon the particular user profile. The content may include Internet favorites, contact information in an address book, photographs, and the like. In another embodiment, the personalized screen has a particular theme or style based upon the particular user profile. In yet another embodiment, the personalized screen displays selected content based upon the particular user profile.

In Block 667, removal of the peripheral device 320 from the electronic device 110 is detected.

In Block 669, access to the particular user profile is terminated upon remove of the peripheral device 320.

If there is no match between the device identifier from the electronic device 110 and the device identifier from the selected user profile, then according to Block 670, a password is requested from the electronic device 110 that houses the peripheral device 320.

In Block 675, a password is received from the electronic device 110.

In Block 680, a match is performed on the password received from the electronic device 110 and the password associated with the user profile that corresponds with the peripheral device 320.

If both passwords match, then the content and preferences are made available to the electronic device 110 similar to the Block 665.

In Block 687, removal of the peripheral device 320 from the electronic device 110 is detected.

In Block 689, access to the particular user profile is terminated upon remove of the peripheral device 320.

If the password within the user profile does not match the password received from the electronic device 110, then access to the content and preferences associated with the user profile that corresponds with the peripheral device 320 is denied to the electronic device 110.

In use, a user places the peripheral device 320 within the receptacle 310 of the electronic device 110. In one embodiment, the peripheral device 320 is a dongle. Typically, a dongle is a hardware device that is used as a key for accessing a software application. In another embodiment, the peripheral device 320 is a video game cartridge. In yet another embodiment, the peripheral device is a memory device such as a compact flash memory card, a USB portable flash memory device, a compact disc, a digital video disc, a Memory Stick ®, and the like.

In one embodiment, the peripheral device 320 includes a user identifier that corresponds with the user of the peripheral device 320 and the user profile that is stored within the system 400. By having the user-insert the peripheral device 320 into the electronic device 110, the user profile (stored within the system 400) associated with the particular peripheral device 320 is automatically selected.

In one embodiment, the device identifier stored within the selected user profile is compared with the device identifier associated with the particular electronic device 110 utilized by the user to insert the peripheral device 320. If there is a match, then the particular user profile is made available to the user of the electronic device 110. For example, if the user inserts the peripheral device 320 into a previously authorized electronic device 110, then the user profile associated with the peripheral device 320 is made available to the user through the electronic device 110 without further verification. In other words, if the user of the peripheral device 320 is inserted into a previously authorized electronic device 110, then the user profile is made immediately available to the particular electronic device 110 without needing additional input from the user. Further, if multiple device identifiers are associated with the user profile, then the corresponding peripheral device 320 can utilize multiple authorized electronic devices 110 to automatically access the user profile.

However, if the user inserts the peripheral device 320 into an unauthorized electronic device 110, then a password is requested from the user to verify the identity of the user. The password provided by the user matched against a password associated with the user profile related to the peripheral device 320. If both passwords match, then the user profile is made available to the user of the unauthorized electronic device 110. If the passwords fail to match, then the user profile is not made available to the unauthorized electronic device 110. There are instances when denying access to the corresponding user profile is useful such as when the peripheral device 320 is lost or stolen.

In one embodiment, the insertion of the peripheral device 320 into the electronic device 110 automatically initiates access to the user profile associated with the peripheral device 320. Similarly, the removal of the peripheral device 320 from the electronic device 110 automatically terminates access to the user profile associated with the peripheral device 320. For example, the act of inserting the peripheral device 320 into the electronic device 110 may produce a similar result as a user manually logging into an account. Further, the act of removing the peripheral device 320 from the electronic device 110 may produce a similar result as a user manually logging out of an account.

The flow diagram in Figure 7 illustrates creating a user profile according to one embodiment of the invention. In Block 710, a peripheral device 320 is inserted within an electronic device 110.

In Block 720, a user identifier associated with the peripheral device 320 fails to match any of the user identifiers associated with a plurality of user profiles.

In Block 730, a new profile is created that utilizes the user identifier associated with the peripheral device 320. In one embodiment, this new user profile includes content and preferences related to formatting and presenting the content.

In Block 740, the new user profile is stored as a record similar to the record 500. In one embodiment, the record is stored in the storage module 430.

In Block 750, the content associated with the new user profile is stored. In one embodiment, the content is stored within the storage module 430. In another embodiment, the content is stored outside the system 400 and references the location of the content within the new user profile.

The foregoing descriptions of specific embodiments of the invention have been presented for purposes of illustration and description. For example, the invention is described within the context of automatically selecting a profile as merely one embodiment of the invention. The invention may be applied to a variety of other applications.

They are not intended to be exhaustive or to limit the invention to the precise embodiments disclosed, and naturally many modifications and variations are possible in light of the above teaching. The embodiments were chosen and described in order to explain the principles of the invention and its practical application, to thereby enable others skilled in the art to best utilize the invention and various embodiments with various modifications as are suited to the particular use contemplated. It is intended that the scope of the invention be defined by the Claims appended hereto and their equivalents.

## Claims

1. A method for automatically selecting a user profile comprising:
detecting (630) a peripheral device (320) in communication with an electronic device (110);
selecting a user profile associated with the peripheral device; the preferences and content associated with the selected user profile are made available to the electronic device (665) if there is a match between a device identifier from the electronic device and a device identifier from the selected user profile; and
requesting a password (670) from the electronic device when the device identifier from the electronic device is different from the device identifier from the selected user profile.

2. The method according to Claim 1 further comprising matching (650) a user identifier associated with the peripheral device with a user identifier associated with the user profile.

3. The method according to Claim 1 further comprising selecting the user profile from a plurality of user profiles based on a user identifier associated with the peripheral device.

4. The method according to Claim 1 further comprising detecting removal (667) of the peripheral device from the electronic device.

5. The method according to Claim 4 further comprising terminating access (669) of the electronic device to the user profile based on detecting the removal of the peripheral device from the electronic device.

6. The method according to Claim 1 wherein the user profile includes one of the user identifier associated with the user profile, content, formatting instructions from the content, and the device identifier from the user profile.

7. The method according to Claim 1 wherein the electronic device includes one of a gaming console, a computer, a cellular phone, a personal digital assistant, and a set top box.

8. The method according to Claim 1 wherein the peripheral device includes one of a video game cartridge, an electronic memory device, a dongle, compact disc, and a digital video disc.

9. The method according to Claim 1 further comprising presenting the user profile to the electronic device when the password from the electronic device matches a password associated with the user profile.

10. The method according to Claim 1 further comprising preventing display (690) of the user profile to the electronic device when the password from the electronic device is different from a password associated with the user profile.

11. The method according to any preceding claim, further comprising:
detecting the device identifier from the electronic device; and
detecting the user identifier from the peripheral device.

12. The method according to Claim 11 further comprising detecting insertion of the peripheral device within the electronic device.

13. The methods according to Claim 12 wherein automatically presenting the selected user profile further comprises automatically presenting the user profile based on detecting the insertion of the peripheral device within the electronic device.

14. Apparatus for automatically selecting a user profile, said apparatus comprising:
means for detecting a peripheral device in communication with an electronic device;
means for selecting a user profile associated with the peripheral device;
means for making available the preferences and content associated with the selected user protile to the electronic device if there is a match between a device identifier from the electronic device and a device identifier from the selected user profile; and
means for requesting a password from the electronic device when the device identifier from the electronic device is different from the device identifier from the selected user profile.

15. The apparatus of claim 14, further comprising:
an identification detection module (410) configured for receiving a user identifier associated with a peripheral device and a device identifier from an electronic device;
a storage module (430) configured for storing a user profile wherein the user profile includes a user identifier associated with the user profile and a device identifier associated with the user profile; and
an interface module (440) configured for presenting the user profile when one of the device identifier from the electronic device matches a device identifier associated with the user profile and a password from the electronic device matches a password associated with the user profile when the device identifier from the electronic device is different than the device identifier associated with the user profile.

16. The apparatus according to Claim 15 further comprising a match module (420) configured to match the user identifier associated with the peripheral device and the user identifier associated with the user profile.

## Patentansprüche

1. Verfahren zum automatischen Auswählen eines Benutzerprofils, welches umfasst,:
Erfassen (630) einer peripheren Einrichtung (320) in Kommunikation mit einer elektronischer Einrichtung (110);
Auswählen eines Benutzerprofils in Verbindung mit der peripheren Einrichtung;
wobei die Präferenzen und Inhalte in Verbindung mit dem ausgewählten Benutzerprofil der elektronischen Einrichtung (665) verfügbar gemacht werden, wenn es einen Abgleich zwischen einem Einrichtungsidentifizierer von der elektronischen Einrichtung und einem Einriehtungsidentifzierer von dem ausgewählten Benutzerprofil gibt; und
Anfordern eines Passworts (670) von der elektronischen Einrichtung, wenn der Einrichtungsidentifizierer von der elektronischen Einrichtung gegenüber dem Einrichtungsidentifizierer vom ausgewählten Benutzerprofil verschieden ist.

2. Verfahren nach Anspruch 1, welches außerdem Abgleichen (650) eines Benutzeridentifizierers in Verbindung mit der peripheren Einrichtung mit einem Benutzeridentifizierer in Verbindung mit dem Benutzerprofil umfasst.

3. Verfahren nach Anspruch 1, welches außerdem das Auswählen des Benutzerprofils von mehreren Benutzerproflen auf Basis eines Benutzeridentifizierers in Verbindung mit der peripheren Einrichtung umfasst.

4. Verfahren nach Anspruch 1, welches außerdem das Erfassen eines Entfernens (667) der peripheren Einrichtung von der elektronischen Einrichtung umfasst.

5. Verfahren nach Anspruch 4, welches außerdem einen Beendigungszugriff (669) der elektronischen Einrichtung auf das Benutzerprofil auf Basis der Erfassung des Entfernens der peripheren Einrichtung von der elektronischen Einrichtung umfasst.

6. Verfahren nach Anspruch 1, wobei das Benutzerprofil eines von dem Benutzeridentiftzierer in Verbindung mit dem Benutzerprofil, Inhalt, Formatierungsinstruktionen vom Inhalt und dem Einrichtungsidentifizierer vom Benutzerprofil aufweist.

7. Verfahren nach Anspruch 1, wobei die elektronische Einrichtung eines von einer Spielkonsole, einem Computer, einem Mobiltelefon, einem persönlichen digitalen Assistenten und einer Set-Box aufweist.

8. Verfahren nach Anspruch 1, wobei die periphere Einrichtung eines von einer Videospielkassette, einer elektronischen Speichereinrichtung, einem Dongle, einer Compact Disc und einer digitalen Videodisc umfasst.

9. Verfahren nach Anspruch 1, welches außerdem das Darstellen des Benutzerprofils für die elektronische Einrichtung umfasst, wenn das Passwort von der elektronischen Einrichtung zu einem Passwort in Verbindung mit dem Benutzerprofil passt.

10. Verfahren nach Anspruch 1, welches außerdem das Verhindern der Anzeige (690) des Benutzerprofils für die elektronische Einrichtung umfasst, wenn das Passwort von der elektronischen Einrichtung gegenüber dem Passwort in Verbindung mit dem Benutzerprofil verschieden ist.

11. Verfahren nach einem der vorhergehenden Ansprüche, welches außerdem umfasst:
Erfassen des Einrichtungsidentifizierers von der elektronischen Einrichtung; und
Erfassen des Benutzeridentifizierers von der peripheren Einrichtung.

12. Verfahren nach Anspruch 11, welches außerdem das Erfassen des Einführens der peripheren Einrichtung in die elektronische Einrichtung umfasst.

13. Verfahren nach Anspruch 12, wobei automatisches Präsentieren des ausgewählten Benutzerprofils außerdem automatisches Präsentieren des Benutzerprofils auf Basis der Erfassung des Einführens der peripheren Einrichtung in die elektronische Einrichtung umfasst.

14. Vorrichtung zum automatischen Auswählen eines Benutzerprofils, wobei die Vorrichtung umfasst:
eine Einrichtung zum Erfassen einer peripheren Einrichtung in Kommunikation mit einer elektronischen Einrichtung;
eine Einrichtung zum Auswählen eines Benutzerprofils in Verbindung mit der peripheren Einrichtung;
eine Einrichtung, um die Präferenzen und den Inhalt in Verbindung mit dem ausgewählten Benutzerprofil der elektronischen Einrichtung verfügbar zu machen, wenn es einen Abgleich zwischen einem Einrichtungsidentifizierer von der elektronischen Einrichtung und einem Einrichtungsidentifizierer vom ausgewählten Benutzerprofil gibt; und
eine Einrichtung zum Anfordern eines Passworts von der elektronischen Einrichtung, wenn der Einrichtungsidentifizierer von der elektronischen Einrichtung gegenüber dem Einrichtungsidentifizierer vom ausgewählten Benutzerprofil verschieden ist.

15. Vorrichtung nach Anspruch 14, welche außerdem umfasst:
ein Identifikationserfassungsmodul (410), welches konfiguriert ist, einen Benutzeridentifizierer in Verbindung mit einer peripheren Einrichtung und einen Einrichtungsidentifizierer von einer elektronischen Einrichtung zu empfangen;
ein Speichermodul (430), welches konfiguriert ist, ein Benutzerprofil zu speichern, wobei das Benutzerprofil einen Benutzeridentifizierer in Verbindung mit dem Benutzerprofil und einen Einrichtungsidentifizierer mit dem Benutzerprofil aufweist; und
ein Schnittstellenmodul (440), welches konfiguriert ist, das Benutzerprofil zu Präsentieren, wenn eines von dem Einrichtungsidentifizierer von der elektronischen Einrichtung zu einem Einrichtungsidentifizierer in Verbindung mit dem Benutzerprofil passt und ein Passwort von der elektronischen Einrichtung zu einem Passwort in Verbindung mit dem Benutzerprofil passt, wenn der Einrichtungsidentifizierer von der elektronischen Einrichtung anders ist als der Einrichtungsidentifizierer in Verbindung mit dem Benutzerprofil.

16. Verfahren nach Anspruch 15, welches außerdem ein Abgleichmodul (420) aufweist, welches konfiguriert ist, den Benutzeridentifizierer in Verbindung mit der peripheren Einrichtung und den Benutzeridentifizierer in Verbindung mit dem Benutzerprofil abzugleichen.

## Revendications

1. Procédé pour sélectionner automatiquement le profil d'un utilisateur comportant :
la détection (630) d'un dispositif périphérique (320) en communication avec un dispositif électronique (110);
la sélection d'un profil d'utilisateur associé au dispositif périphérique ;
les préférences et le contenu associés au profil d'utilisateur sélectionné sont rendus disponibles pour le dispositif électronique (665) s'il existe une correspondance entre un identifiant de dispositif provenant du dispositif électronique et un identifiant de dispositif provenant du profil d'utilisateur sélectionné ; et
la demande d'un mot de passe (670) provenant du dispositif électronique lorsque l'identifiant de dispositif provenant du dispositif électronique est différent de l'identifiant de dispositif provenant du profil d'utilisateur sélectionné.

2. Procédé selon la revendication 1, comportant en outre la correspondance (650) d'un identifiant d'utilisateur associé au dispositif périphérique avec un identifiant d'utilisateur associé au profil d'utilisateur.

3. Procédé selon la revendication 1, comportant en outre la sélection du profil d'utilisateur parmi une pluralité de profils d'utilisateurs en fonction d'un identifiant d'utilisateur associé au dispositif périphérique.

4. Procédé selon la revendication 1, comportant en outre la détection de la suppression (667) du dispositif périphérique par le dispositif électronique.

5. Procédé selon la revendication 4, comportant en outre la suspension d'un accès (669) du dispositif électronique au profil d'utilisateur en fonction de la détection de la suppression du dispositif périphérique par le dispositif électronique.

6. Procédé selon la revendication 1, dans lequel le profil d'utilisateur comprend l'un de l'identifiant d'utilisateur associé au profil d'utilisateur, au contenu, au formatage d'instructions à partir du contenu, et à l'identifiant de dispositif à partir du profil d'utilisateur.

7. Procédé selon la revendication 1, dans lequel le dispositif électronique comprend l'un d'une console de jeux, d'un ordinateur, d'un téléphone cellulaire, d'un assistant numérique personnel, et d'un décodeur.

8. Procédé selon la revendication 1, dans lequel le dispositif périphérique comprend l'un d'une cartouche de jeu vidéo, d'un dispositif de mémoire électronique, d'une clé électronique, d'un disque compact, et d'un disque vidéo numérique.

9. Procédé selon la revendication 1, comportant en outre la présentation du profil d'utilisateur au dispositif électronique lorsque le mot de passe provenant du dispositif électronique correspond au mot de passe associé au profil d'utilisateur.

10. Procédé selon la revendication 1, comportant en outre l'empêchement de l'affichage (690) du profil d'utilisateur au dispositif électronique lorsque le mot de passe provenant du dispositif électronique est différent du mot de passe associé au profil d'utilisateur.

11. Procédé selon l'une quelconque des revendications précédentes, comportant en outre :
la détection de l'identifiant de dispositif par le dispositif électronique ; et
la détection de l'identifiant d'utilisateur par le dispositif périphérique.

12. Procédé selon la revendication 11, comportant en outre la détection de l'insertion du dispositif périphérique dans le dispositif électronique.

13. Procédé selon la revendication 12, dans lequel la présentation automatique du profil d'utilisateur sélectionné comporte en outre la présentation automatique du profil d'utilisateur en fonction de la détection de l'insertion du dispositif périphérique dans le dispositif électronique.

14. Appareil pour sélectionner automatiquement un profil d'utilisateur, ledit appareil comportant :
un moyen pour détecter un dispositif périphérique en communication avec un dispositif électronique ;
un moyen pour sélectionner un profil d'utilisateur associé au dispositif périphérique ;
un moyen pour rendre disponibles les préférences et le contenu associés au profil d'utilisateur sélectionné au dispositif électronique s'il existe une correspondance entre un identifiant de dispositif provenant du dispositif électronique et un identifiant de dispositif provenant du profil d'utilisateur sélectionné ; et
un moyen pour demander un mot de passe par le dispositif électronique lorsque l'identifiant de dispositif provenant du dispositif électronique est différent de l'identifiant de dispositif provenant du profil d'utilisateur sélectionné.

15. Appareil selon la revendication 14, comportant en outre :
un module de détection d'identification (410) configuré pour recevoir un identifiant d'utilisateur associé à un dispositif périphérique et un identifiant de dispositif provenant d'un dispositif électronique ;
un module de stockage (430) configuré pour mémoriser un profil d'utilisateur dans lequel le profil d'utilisateur comprend un identifiant d'utilisateur associé au profil d'utilisateur et un identifiant de dispositif associé au profil d'utilisateur ; et
un module d'interface (440) configuré pour présenter le profil d'utilisateur lorsque l'un de l'identifiant de dispositif d'un provenant du dispositif électronique correspond à l'identifiant de dispositif associé au profil d'utilisateur et un mot de passe provenant du dispositif électronique correspond à un mot de passe associé au profil d'utilisateur lorsque l'identifiant de dispositif provenant du dispositif électronique est différent de l'identifiant de dispositif associé au profil d'utilisateur.

16. Appareil selon la revendication 15, comportant en outre un module de correspondance (420) configuré pour faire correspondre l'identifiant d'utilisateur associé au dispositif périphérique et l'identifiant d'utilisateur associé au profil d'utilisateur.
